# EUROPEAN PATENT APPLICATION

(11) **EP 4 167 057 A1**
(43) Date of publication of application: **19.04.2023**
(21) Application number: 21202170.3
(22) Date of filing: 12.10.2021
(51) Int. Cl.: G06F 3/041

(54) **TOUCH PANEL**

(71) Applicant: Vestel Elektronik Sanayi ve Ticaret A.S., 45030 Manisa (TR)
(72) Inventor: KAHYAOGLU, Mert, 45030 Manisa (TR); YALIN, Nevzat, 45030 Manisa (TR)
(74) Representative: Flint, Adam

(57) **Abstract**

A touch panel (110) comprises: a capacitive touch sensor constructed and arranged to generate capacitive values in response to touch inputs at the touch panel (110); and a cover layer (116) located over the capacitive touch sensor. The cover layer (116) has disposed thereon or therein an electrically conductive material (117) arranged to generate a first capacitive value (A) at the capacitive touch sensor when the electrically conductive material (117) is in an unbroken state and to generate a second capacitive value (B) at the capacitive touch sensor when the electrically conductive material (117) is in a broken state. The second capacitive value (B) is different from the first capacitive value (A).

## Description

### Technical Field

The present disclosure relates to a touch panel.

### Background

A touch panel is an input device for detecting touch inputs from a user. A touch panel may be overlayed on a display screen to form a so-called "touch screen".

One particular type of touch panel is a capacitive touch panel which uses capacitive sensing technology to detect user touch inputs. There are various different types of capacitive touch panels which use different numbers of layers to provide the capacitive sensing functionality. Typically, a cover layer is also provided over (above) the capacitive touch panel itself, e.g., to provide support and protection. The cover layer is the top-most layer of the capacitive touch panel. The cover layer is the layer which the user interacts with in order to provide touch inputs at the capacitive touch panel via the capacitive touch sensor.

### Summary

According to a first aspect disclosed herein, there is provided a touch panel comprising: a capacitive touch sensor constructed and arranged to generate capacitive values in response to touch inputs at the touch panel; and a cover layer located over the capacitive touch sensor; wherein the cover layer has disposed thereon or therein an electrically conductive material arranged to generate a first capacitive value at the capacitive touch sensor when the electrically conductive material is in an unbroken state and to generate a second capacitive value at the capacitive touch sensor when the electrically conductive material is in a broken state, the second capacitive value being different from the first capacitive value.

The electrically conductive material is in the broken state when there is a fault with the cover layer. Examples of such faults include breaks, cracks, bending, warping, etc.

In an example, the electrically conductive material is disposed in or on the cover layer in a pattern which spans the entire cover layer but does not cover the entire cover layer. This reduces the amount of electrically conductive material required. It may also minimise the decrease in transparency of the touch panel caused by the presence of the electrically conductive material.

In an example, the electrically conductive material covers the entire cover layer. This helps improve the resolution when identifying the location of a fault in the cover layer.

In an example, the second capacitive value is different from a capacitive touch input value generated by touch panel in response to touch inputs at the touch panel. This allows the capacitive value caused by a fault in the cover layer (the second capacitive value) to be distinguished from a "genuine" touch input caused by a user interacting with the touch panel, e.g. using a finger or a stylus.

In an example, the electric conductivity of the electrically conductive material is such that the difference between the first capacitive value and second capacitive value is more than a predetermined threshold amount.

In an example, the cover layer is an electrically-insulating cover layer. The cover layer may have an electrical resistivity of at least 10³Ωm, and in some examples an electrical resistivity of at least 10¹⁰Ωm.

According to a second aspect disclosed herein, there is provided a touch panel device comprising a touch panel according to the first aspect or any example thereof, and a controller configured to receive capacitive input values from the capacitive touch sensor and to determine a fault with the touch panel in response to receiving the second capacitive value.

In an example, the controller is configured to determine a location of the fault based on determining a location on the touch panel corresponding to the second capacitive value.

In an example, wherein the plurality of layers includes a display screen for displaying graphic content, and the controller is configured to modify the graphic content based on the determined location of the fault. This means that a user is still able to see the graphic content which would otherwise have been obscured by the fault in the cover layer.

In an example, the controller is configured to determine the first capacitive value and to apply a filter to disregard the first capacitive value received from the touch panel. This means that the controller will not interpret the first capacitive value (caused by the presence of the electrically conductive material) as a touch input.

### Brief Description of the Drawings

To assist understanding of the present disclosure and to show how embodiments may be put into effect, reference is made by way of example to the accompanying drawings in which:
Figure 1 shows schematically an example of a touch panel device; and
Figure 2 shows schematically an exploded view of an example of a touch panel.

### Detailed Description

Capacitive touch panels form an important part of many types of device. For example, a capacitive touch panel can be arranged over a display screen to form a so-called "touchscreen". A user may then interact with graphic content displayed on the display screen by touching a corresponding area of the capacitive touch panel. For example, a charging point for an electric vehicle may use a capacitive touchscreen as a user interface allowing the user to select charging options, contact emergency services, etc.

Faults (e.g. cracks) in the cover layer of a capacitive touch panel can make it difficult for the user to see the graphic content (below the location of the fault). If the capacitive touch panel is in a remote location, such as may be the case for e.g. a charging point for an electric vehicle, faults may not be seen by maintenance personnel very frequently. This can mean that the user is unable to interact with the device in the desired manner. In the above example, this may mean that the user is unable to charge their vehicle or contact emergency services.

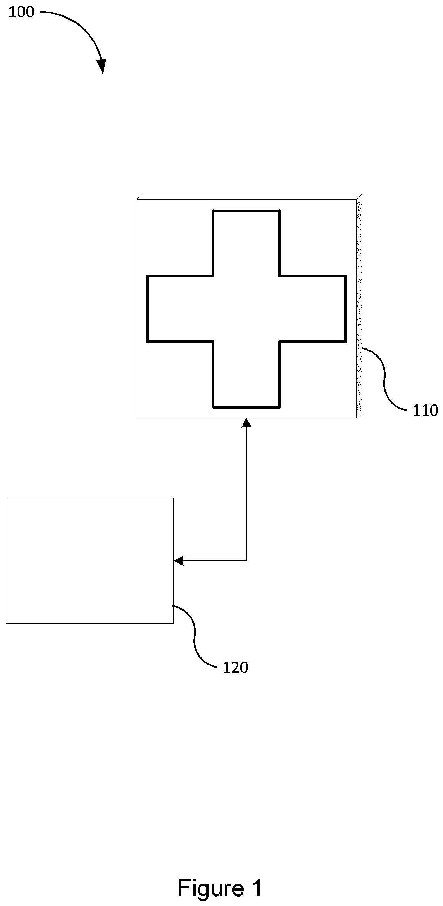

Figure 1 shows schematically a touch panel device 100 in accordance with examples described herein. The touch panel device 100 comprises a touch panel 110 and a controller 120. The controller 120 is operatively coupled to the touch panel 110. The controller 120 may be or include, for example, a processor.

As will be described in more detail below, the touch panel 110 comprises a plurality of layers including: i) at least one layer forming a capacitive touch sensor; and ii) a cover layer located over the capacitive touch sensor. In operation, the controller 120 determines touch inputs at the touch panel 110 based on capacitive values received from the capacitive touch sensor.

The cover layer 116 is the top layer of the touch panel 110 with which the user interacts. The user provides touch inputs to the touch panel 110 by bringing, e.g., their finger or a stylus into contact with (or at least within proximity of) the cover layer 116. The cover layer 116 provides protection, and sometimes support, for the underlying components of the touch panel 110.

The capacitive touch sensor generates (capacitive) input values in response to touch inputs at the touch panel 110. The capacitive touch sensor may be implemented using any known capacitive touch sensing technology including, for example, surface capacitance or projected capacitance (e.g. mutual or self-capacitance).

Different types of capacitive touch sensor require different numbers of layers. In general, the capacitive touch sensor comprises at least one "active" layer to which the controller 120 is operatively coupled. The capacitive touch sensor may also comprise one or more "passive" layers such as a dielectric layer. The description below focusses on a capacitive touch sensor comprising two layers, but it is appreciated that the capacitive touch sensor could be implemented using only a single active layer (such as the case, for example, with a surface capacitance sensor).

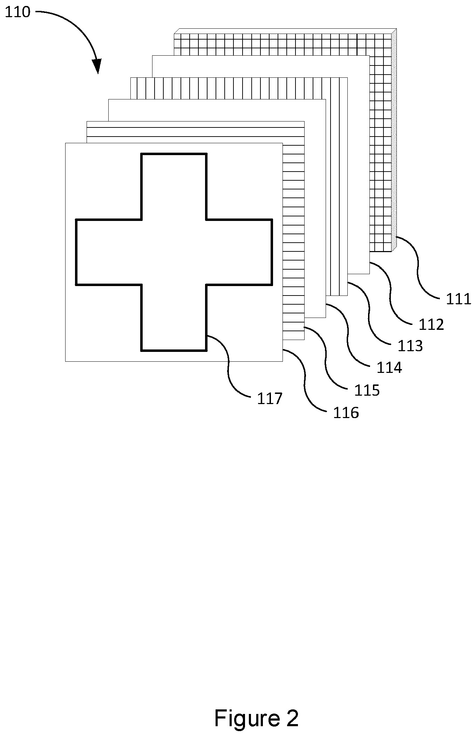

An example of the touch panel 110 is shown in exploded view in Figure 2. In this example, the touch panel 110 is located on a display screen 111 to form a "touch screen". The display screen 111 may form part of a display device.

In this example, the touch panel 110 comprises, in order from rear to front: a rear support layer 112, a sensing layer 113, a dielectric layer 114, a driving layer 115, and a cover layer 116. The cover layer 116 is the "top" layer of the touch panel 110 which the user interacts with e.g. with their finger or a stylus. The display screen 111 is also shown in Figure 2, which is described in more below. As mentioned, the cover layer 116 provides protection, and sometimes support, for the underlying layers and components of the touch panel 110.

In this example, the capacitive touch sensor is of the mutual capacitance type. The dielectric layer 114 is the passive layer of the capacitive touch sensor. The dielectric layer 114 may be made of, for example, polyethylene terephthalate (PET), some other plastics, glass, mica, ceramic, or some other electrically insulating material. The sensing layer 113 and the driving layer 115 are the active layers of the capacitive touch sensor. The driving layer 115 comprises a plurality of driving lines. The sensing layer 113 comprises a plurality of sensing lines arranged non-parallel (e.g. perpendicular) to the lines in the driving layer 115.

The controller 120 is operatively coupled to the sensing layer 113 and the driving layer 115. In operation, the controller 120 applies a voltage to the driving lines and measures voltages on the sensing lines in order to detect touch inputs on the touch panel 110. Specifically, a touch input at a given driving line and sensing line (i.e. at the intersection) reduces the mutual capacitance between that driving line and that sensing line. This causes a measurable change in the voltage on that sensing line (and potentially one or more nearby sensing lines), which the controller 120 can use to determine that a touch input has taken place. As known in the art, the controller 120 may also be able to detect a location of the touch input.

The controller 120 is also operatively coupled to the display 111. The display 111 is controlled to output light via the front of the touch panel 110 to display graphic content. The display 111 may be, for example, an LCD display, an LED display, or another type of display. It is important that the layers located above the display 111 are sufficiently transparent that graphic content displayed by the display 111 can be viewed by the user from the front of the touch panel 110. This includes the cover layer 116. The cover layer 116 may be made of, for example, glass or PET or some other electrically insulating material. In examples, the cover layer 116 may have an electrical resistivity of at least 10³Ωm, and in some examples an electrical resistivity of at least 10¹⁰Ωm.

The controller 120 generally cannot identify faults (e.g. breaks, cracks, bends, or warping) in the cover layer 116 because they result in little to no change in the capacitive values generated by the capacitive touch sensor. Such faults can obscure the user's view of the display screen 111, meaning that the user may not be able to properly see at least a portion of the display 111 located underneath the fault. As explained earlier above, this can mean that the user is unable to interact with the touch panel 110 in the desired manner, which can be safety-critical.

To address this, an electrically conductive material 117 is disposed on or in the cover layer 116. This means that the electrically conductive material 117 has an effect on the capacitive touch sensor. Specifically, the presence of the electrically conductive material 117 will be registered by the controller 120 as a first capacitive value. The electrically conductive material 117 may be, for example, electrically conductive dye or paint.

Because the electrically conductive material 117 is disposed on or in the cover layer 116, any fault with the cover layer 116, such as a crack in the cover layer 116, will result in a corresponding fault to the electrically conductive material 117, such as a crack in the electrically conductive material 117. This means that the capacitive value registered by the controller 120 will change to a second capacitive value when there is a fault with the cover layer 116. Because the second capacitive value is different from the first capacitive value, the controller 120 is able to detect the fault with the cover layer 116 which, as mentioned above, would otherwise not have been detectable by the controller 120. Specifically, the controller 120 is configured to determine a fault with the touch panel 110 in response to receiving the second capacitive value from the capacitive touch sensor. Notably, this occurs when there is no touch from a user and so a fault can be detected even in the absence of a touch from a user.

There are two regions of interest: 1) a region of the touch panel 110 corresponding to the conductive material 117 (i.e. where the conductive material 117 is present); and 2) a complementary region of the touch panel 110 not corresponding to the conductive material 117 (i.e. where the conductive material 117 is not present). For each region of interest, the cover layer 116 may be broken or unbroken in that region, and may be touched (by a user) or untouched in that region. There are therefore four possible states for each region of interest: 1) not broken and not touched; 2) touched but not broken; 3) broken but not touched; and 4) broken and touched.

Table 1 below summarises the different capacitive values which may be received at the controller 120 from the capacitive touch sensor for the different regions of interest in each state 1-4 described above.

**Table 1**

| State | State | | Measured Input Value | |
|---|---|---|---|---|
| | Broken? | Touched? | Conductive Material | No Conductive Material |
| 1 | No | No | A | 0 |
| 2 | No | Yes | A+T | T |
| 3 | Yes | No | B | 0 |
| 4 | Yes | Yes | B+T | T |

In general, a (genuine) touch input causes the measured capacitive value to change by an amount T. This may be, for example, a decrease in the mutual capacitance between one or more of the driving lines and the sensing lines in response to a user touching the cover layer 116.

As can be seen in Table 1, there is no difference between measured capacitive values between the broken states 3, 4 and unbroken states 1, 2 for the region of the touch panel 110 where the conductive material is not present. This means that the controller 120 has no way to distinguish between the broken states 3,4 and unbroken states 1,2.

As mentioned, the conductive material causes a first capacitive value "A" when in the unbroken (and untouched) state 1, and causes a second capacitive value "B" when in the broken (and untouched) state 3. Correspondingly, the capacitive values measured by the controller 120 when the conductive material is touched are A+T and B+T for the unbroken state 2 and broken state 4, respectively. It is appreciated that the specific values of the first capacitive value A and second capacitive value B will depend on the type of electrically conductive material 117 used and how and where it is disposed on or in the cover layer 116.

In examples, the electrically conductive material 117 may be selected such that the second capacitive value B is different the capacitive value T generated by "real" touch inputs at the touch panel 110 caused by user interaction.

In examples, the electrically conductive material 117 is sufficiently electrically conductive such that the difference between the first capacitive value A and second capacitive value B is more than a predetermined threshold amount.

In examples, the controller 120 may determine the first capacitive value A and store it to a data storage as a "reference value". The controller 120 may filter out the first capacitive value A, i.e. the controller 120 may ignore these inputs as not being "real" touch inputs. The first capacitive value A may be determined by the controller 120 at a point in time where it is known that the cover layer 116 is not broken and there are no user inputs to the touch panel 110, e.g. during a commissioning stage. In other examples, the first capacitive value A may be determined by the controller 120 based on a long-term average (e.g. mode) of touch inputs to the touch panel 110 over a period of time.

In examples, the controller 120 may determine a location of the fault based on determining a location on the touch panel 110 corresponding to the second capacitive value B. The controller 120 may determine, based on this location, a corresponding part of the display 111 which is located behind the fault location. The controller 120 may then control the display 111 to modify the displayed graphic content accordingly. For example, this may comprise moving a portion of graphic content from that part of the display 111 to a different part of the display 111 not located behind the fault location. As part of this, the controller 120 may reconfigure the image being displayed in order to fit the remaining, unbroken, part, for example by shrinking portions of the image, removing portions of the image, etc., instead of or in addition to moving a portion of the image.

It is appreciated that the displayed graphic content may correspond to an application running on a processor (e.g. the controller 120, but potentially a different processor). The controller 120 may be configured to adjust functionality of the application in a similar manner to the graphic content. For example, the controller 120 may move both a graphic user interface button and the functionality associated with this button from the fault location to a different, non-faulty part of the display 111. This means that the user is still able to see and interact with this button. This is particularly advantageous, for example, in situations where maintenance to the cover layer 116 is difficult or impossible. For example, the touch panel device 100 may form part of an electric car charging station located in a remote area.

In some examples, the electrically conductive material 117 may cover the entire cover layer 116. An advantage of this is an improved resolution in the detection of the location of a fault.

In some examples, such as shown in Figures 1 and 2, the electrically conductive material 117 may be disposed on the cover layer 116 in a pattern which spans the entire cover layer 116 but does not cover the entire cover layer 116. An advantage of this is that it reduces the amount of electrically conductive material 117 required. Examples of suitable patterns include grid lines, a "snaking" or serpentine curve, a spiral (e.g. a square spiral) etc.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to data storage for storing data. This may be provided by a single device or by plural devices. Suitable devices include for example a hard disk and non-volatile semiconductor memory (including for example a solid-state drive or SSD).

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A touch panel (110) comprising:
a capacitive touch sensor constructed and arranged to generate capacitive values in response to touch inputs at the touch panel (110); and
a cover layer (116) located over the capacitive touch sensor;
wherein the cover layer (116) has disposed thereon or therein an electrically conductive material (117) arranged to generate a first capacitive value (A) at the capacitive touch sensor when the electrically conductive material (117) is in an unbroken state and to generate a second capacitive value (B) at the capacitive touch sensor when the electrically conductive material (117) is in a broken state, the second capacitive value (B) being different from the first capacitive value (A).

2. A touch panel (110) according to claim 1, wherein the electrically conductive material (117) is disposed in or on the cover layer (116) in a pattern which spans the entire cover layer (116) but does not cover the entire cover layer (116).

3. A touch panel (110) according to claim 1, wherein the electrically conductive material (117) covers the entire cover layer (116).

4. A touch panel (110) according to any of claims 1 to 3, wherein the second capacitive value (B) is different from a capacitive touch input value (T) generated by touch panel (110) in response to touch inputs at the touch panel (110).

5. A touch panel (110) according to any of claims 1 to 4, wherein the electric conductivity of the electrically conductive material (117) is such that the difference between the first capacitive value (A) and second capacitive value (B) is more than a predetermined threshold amount.

6. A touch panel (110) according to any of claims 1 to 5, wherein the cover layer (116) is an electrically-insulating cover layer.

7. A touch panel device (100) comprising a touch panel (110) according to any of claims 1 to 6 and a controller (120) configured to receive capacitive input values from the capacitive touch sensor and to determine a fault with the touch panel (110) in response to receiving the second capacitive value (B).

8. A touch panel device (100) according to claim 7, wherein the controller (120) is configured to determine a location of the fault based on determining a location on the touch panel (110) corresponding to the second capacitive value (B).

9. A touch panel device (100) according to claim 8, wherein the plurality of layers includes a display (111) for displaying graphic content, and the controller (120) is configured to modify the graphic content based on the determined location of the fault.

10. A touch panel device (100) according to any of claims 7 to 9, wherein the controller (120) is configured to determine the first capacitive value (A) and to apply a filter to disregard the first capacitive value (A) received from the touch panel (110).
